# EUROPEAN PATENT APPLICATION

(11) **EP 4 604 434 A1**
(43) Date of publication of application: **20.08.2025**
(21) Application number: 22961806.1
(22) Date of filing: 14.10.2022
(51) Int. Cl.: H04L 5/00

(54) **PHYSICAL DOWNLINK SHARED CHANNEL (PDSCH) TRANSMISSION METHOD AND APPARATUS**

(71) Applicant: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2022/125498
(87) International publication number: WO 2024/077620

(57) **Abstract**

Disclosed in embodiments of the present application are a physical downlink shared channel (PDSCH) transmission method and apparatus. First indication information sent by a network device is received, the first indication information being used for indicating at least one first TCI state; second indication information sent by the network device is received, the second indication information being used for a terminal device to determine use of a target transmission manner for a PDSCH; and a second TCI state corresponding to the PDSCH transmitted by using the target transmission manner is determined from the at least one first TCI state, the second TCI state being used for the terminal device to receive the PDSCH. Thus, when the network device indicates multiple sets of TCI states, the terminal device used for transmission by using multiple TRPs can determine the TCI state corresponding to the PDSCH transmitted by using the target transmission manner, so as to complete the transmission of the PDSCH, thereby increasing the flexibility of PDSCH transmission, and improving the performance of PDSCH transmission.

## Description

### TECHNICAL FIELD

The disclosure relates to the field of communication technology, and in particular to a method and an apparatus for physical downlink shared channel (PDSCH) transmission.

### BACKGROUND

In a 5G new radio (NR) system, in a case where a base station is provided with multiple transmission and reception points (or transmit/receive points, TRPs), the multiple TRPs may be used to provide a serve for a terminal, including transmitting a physical downlink shared channel (PDSCH) via the multiple TRPs.

In the related arts, a unified transmission configuration indication (TCI) state for a single TRP is considered only, that is, a method for indicating a single set of TCI states is considered only. In a case where the base station transmits the PDSCH to the terminal using the multiple TRPs, the PDSCH may be configured to perform coherent joint transmission (CJT), and the base station may indicate at least two sets of TCI states. In this case, how to determine the TCI state corresponding to a PDSCH delivered by using the CJT method is a problem to be solved.

### SUMMARY

A first aspect of embodiments of the disclosure provides a method for physical downlink shared channel (PDSCH) transmission. The method is performed by a terminal, including:
receiving first indication information from a network device, in which the first indication information indicates at least one first transmission configuration indication (TCI) state;
receiving second indication information from the network device, in which the second indication information is configured for the terminal to determine that the PDSCH uses a target transmission manner; and
determining a second TCI state corresponding to the PDSCH delivered by using the target transmission manner from the at least one first TCI state, in which the second TCI state is configured for the terminal to receive the PDSCH.

A second aspect of embodiments of the disclosure provides a method for PDSCH transmission. The method is performed by a network device, including:
sending first indication information to a terminal, in which the first indication information indicates at least one first TCI state; and
sending second indication information to the terminal, in which the second indication information is configured for the terminal to determine that the PDSCH uses a target transmission manner;
the at least one first TCI state includes a second TCI state corresponding to the PDSCH delivered by using the target transmission manner, and the second TCI state is configured for the terminal to receive the PDSCH.

A third aspect of embodiments of the disclosure provides an apparatus for PDSCH transmission. The apparatus is configured in a terminal, including:
a transceiver unit, configured to receive first indication information from a network device, in which the first indication information indicates at least one first TCI state;
the transceiver unit is further configured to receive second indication information from the network device, in which the second indication information is configured for the terminal to determine that the PDSCH uses a target transmission manner; and
a processing unit, configured to determine a second TCI state corresponding to the PDSCH delivered by using the target transmission manner from the at least one first TCI state, in which the second TCI state is configured for the terminal to receive the PDSCH.

A fourth aspect of embodiments of the disclosure provides an apparatus for PDSCH transmission. The apparatus is configured in a network device, including:
a transceiver unit, configured to send first indication information to a terminal, in which the first indication information indicates at least one first TCI state;
the transceiver unit is further configured to send second indication information to the terminal, in which the second indication information is configured for the terminal to determine that the PDSCH uses a target transmission manner; and
the at least one first TCI state includes a second TCI state corresponding to the PDSCH delivered by using the target transmission manner, and the second TCI state is configured for the terminal to receive the PDSCH.

A fifth aspect of embodiments of the disclosure provides a communication device. The communication device includes a processor and a memory, in which the memory stores a computer program, which, when executed by the processor, causes the device to implement the method for PDSCH transmission as described in the first aspect of embodiments.

A six aspect of embodiments of the disclosure provides a communication device. The communication device includes a processor and a memory, in which the memory stores a computer program, which, when executed by the processor, causes the device to implement the method for PDSCH transmission as described in the second aspect of embodiments.

A seventh aspect of embodiments of the disclosure provides a communication device. The communication device includes a processor and an interface circuit; in which the interface circuit is configured to receive code instructions and transmit the code instructions to the processor; and the processor is configured to run the code instructions to cause the device to implement the method for PDSCH transmission as described in the first aspect of embodiments.

An eighth aspect of embodiments of the disclosure provides a communication device. The communication device includes a processor and an interface circuit; in which the interface circuit is configured to receive code instructions and transmit the code instructions to the processor; and the processor is configured to run the code instructions to cause the device to implement the method for PDSCH transmission as described in the second aspect of embodiments.

A ninth aspect of embodiments of the disclosure provides a computer-readable storage medium. The computer-readable storage medium is configured to store instructions which, when executed, cause the method for PDSCH transmission as described in the first aspect of embodiments to be implemented.

A tenth aspect of embodiments of the disclosure provides a computer-readable storage medium. The computer-readable storage medium is configured to store instructions which, when executed, cause the method for PDSCH transmission as described in the second aspect of embodiments to be implemented.

An eleventh aspect of embodiments of the disclosure provides a computer program that, when running on a computer, causes the computer to implement the method for PDSCH transmission as described in the first aspect of embodiments.

A twelfth aspect of embodiments of the disclosure provides a computer program that, when run on a computer, causes the computer to implement the method for PDSCH transmission as described in the second aspect of embodiments.

In the method and the apparatus for PDSCH transmission provided in embodiments of the disclosure provide, the first indication information is received from the network device, in which the first indication information indicates the at least one first TCI state, the second indication information is received from the network device, in which the second indication information is configured for the terminal to determine that the PDSCH uses the target transmission manner; and the second TCI state corresponding to the PDSCH delivered by using the target transmission manner is determined from the at least one first TCI state, in which the second TCI state is configured for the terminal to receive the PDSCH. This enables that the terminal configured for multi-TRP transmission can determine the TCI state corresponding to the PDSCH using the target transmission manner in a case where the network device indicates a plurality of sets of TCI states, and complete transmission of the PDSCH, thereby increasing flexibility of the PDSCH transmission, and improving performance of the PDSCH transmission.

Additional aspects and advantages of the present disclosure will be partially given in the following description, and some will become obvious from the following description, or be understood through practice of the present disclosure.

### BRIEF DESCRIPTION OF THE DRAWINGS

In order to explain technical solutions in the embodiments of the disclosure or the related art more clearly, the drawings described in the embodiments of the disclosure or required in the related art will be introduced below.
FIG. 1 is a flowchart illustrating a method for PDSCH transmission provided in embodiments of the disclosure.
FIG. 2 is a flowchart illustrating a method for PDSCH transmission provided in embodiments of the disclosure.
FIG. 3 is a flowchart illustrating a method for PDSCH transmission provided in embodiments of the disclosure.
FIG. 4 is a flowchart illustrating a method for PDSCH transmission provided in embodiments of the disclosure.
FIG. 5 is a flowchart illustrating a method for PDSCH transmission provided in embodiments of the disclosure.
FIG. 6 is a structural schematic diagram illustrating an apparatus for PDSCH transmission provided in embodiments of the disclosure.
FIG. 7 is a structural schematic diagram illustrating an apparatus for PDSCH transmission provided in embodiments of the disclosure.
FIG. 8 is a structural schematic diagram illustrating an apparatus for PDSCH transmission provided in embodiments of the disclosure.
FIG. 9 is a structural schematic diagram illustrating a chip provided in embodiments of the present disclosure.

### DETAILED DESCRIPTION

For ease of understanding, terms involved in the disclosure are first explained.

TRP: transmission and reception point or transmit/receive point, corresponding to a serving cell or a neighboring cell of a terminal. One cell includes one or more TRPs. One TRP includes one or more panels, and each panel includes one or more co-located antennas.

PDCCH: physical downlink control channel.

PDSCH: physical downlink shared channel.

PUCCH: physical uplink control channel.

PUSCH: physical uplink shared channel.

DL: downlink.

UL: uplink.

TCI: transmission configuration indication.

DCI: downlink control information.

RRC: radio resource control.

CSI-RS: channel state information reference signal.

NZP CSI-RS: non-zero power CSI-RS, mainly configured for time-frequency tracking, CSI calculation, mobility management, etc.

DMRS: demodulation reference signal.

CMR: channel measurement resource.

MAC CE: medium access control control element.

CJT: coherent joint transmission.

BWP: bandwidth part.

CC: component carrier.

CQI: channel quality indication.

PMI: precoding matrix indicator.

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Terms used herein in embodiments of the present disclosure are only for the purpose of describing specific embodiments, but should not be construed to limit the present disclosure. As used in the embodiments of the present disclosure and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" or "in case of" may be interpreted as "when" or "upon" or "in response to determining" depending on the context.

Embodiments of the present disclosure are described in detail below, examples of which are illustrated in the accompanying drawings. The same or similar reference numerals represent the same or similar elements throughout the descriptions. The embodiments described below with reference to the accompanying drawings are illustrative, are intended to explain the present disclosure and cannot be construed as limiting the present disclosure.

It should be noted that the technical solution in embodiments of the present disclosure may be applicable for various communication systems, for example, a long term evolution (LTE) system, a 5th generation (5G) mobile communication system, a 5G new radio (NR) system or other future new mobile communication systems.

A network device in embodiments of the disclosure is an entity on a network side for transmitting or receiving signals. For example, the network device 101 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in the embodiments of the disclosure. The network device according to the embodiments of the disclosure may be composed of a central unit (CU) and distributed units (DUs). The CU may also be referred to as a control unit. The use of CU-DU structure allows to divide a protocol layer of the network device, such as a base station, such that some of the protocol layer functions are placed in the CU for centralized control, and some or all of the remaining protocol layer functions are distributed in the DUs, and the DUs are centrally controlled by the CU.

A terminal in embodiments of the disclosure is an entity on a user side for receiving or transmitting signals, such as a cellular phone. The terminal device may also be referred to as a terminal, a user equipment (UE), a mobile station (MS), a mobile terminal (MT), and the like. The terminal device can be a car with communication functions, a smart car, a mobile phone, a wearable device, a Pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The specific technology and specific device form adopted by the terminal device are not limited in the embodiments of the disclosure.

In the communication system, in a case where a base station is provided with multiple transmission and reception points (multi-TRP), the multi-TRP may be used to provide a serve for a terminal, including transmitting a physical downlink shared channel (PDSCH) via the multi-TRP.

In the related arts, a unified TCI state for a single TRP is considered only, that is, a method for indicating a single set of TCI states is considered only. In a case where the base station transmits the PDSCH to the terminal using the multi-TRP, the PDSCH may be configured to perform coherent joint transmission (CJT), while at least one other channel may be configured for M-TRP transmission, and the base station may indicate at least two sets of TCI states. In this case, how to determine the TCI state corresponding to a PDSCH delivered by using the CJT method is a problem to be solved.

The unified TCI state includes a joint TCI state and/or a separate TCI state. The joint TCI state specifically includes indicating a single TCI state used for both uplink transmission and downlink reception. The separate TCI state specifically includes indicating a TCI state used for either uplink transmission or downlink reception. The separate TCI state further includes a downlink (DL) TCI state and an uplink (UL) TCI state, the DL TCI state is configured for downlink reception and the UL TCI state is configured for uplink transmission.

A method and an apparatus for PDSCH transmission provided in the present disclosure will be introduced in detail below with reference to the accompanying drawings.

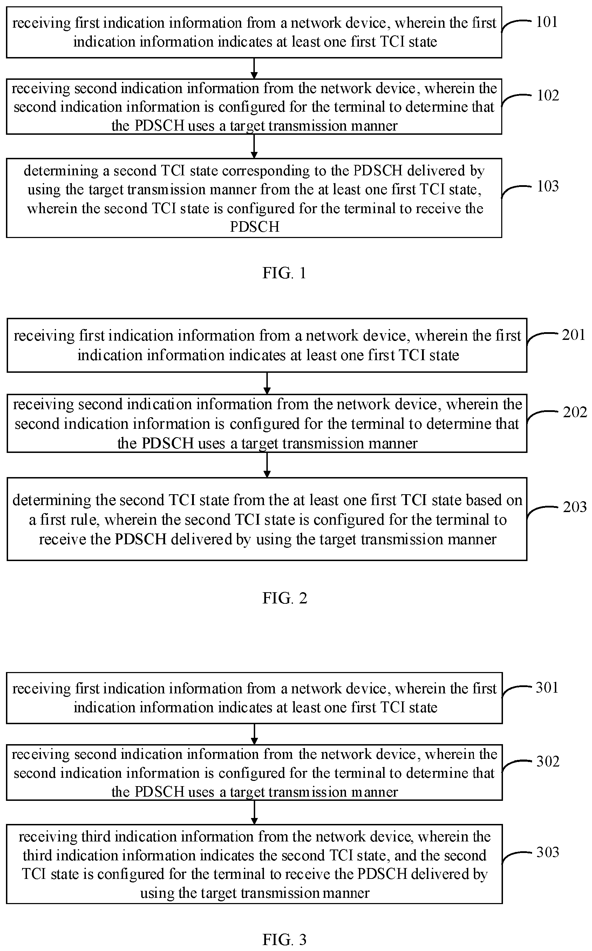

Referring to FIG. 1, FIG. 1 is a flow chart illustrating a method for PDSCH transmission provided in embodiments of the disclosure. It should be noted that the method for PDSCH transmission in embodiments of the disclosure is performed by a terminal. As shown in FIG. 1, the method may include the following steps 101 to 103.

At step 101, first indication information is received from the network device, in which the first indication information indicates at least one first TCI state.

In an embodiment of the disclosure, the terminal may receive the first indication information from the network device. The first indication information may indicate the at least one first TCI state.

Optionally, the first TCI state may be a joint TCI state and/or a DL TCI state. The joint TCI state may be configured for both UL and DL channels and/or reference signals of the terminal. The DL TCI state may be configured for a DL channel (including PDSCH and/or PDCCH) and/or a corresponding DMRS of the terminal. Optionally, the DL TCI state may also be configured for a CSI-RS.

In some implementations, the first indication information is a first MAC CE. The first MAC CE can indicate the at least one first TCI state, and the at least one first TCI state corresponds to one codepoint in one DCI.

The codepoint may be one codepoint corresponding to a TCI field of the DCI. That is, the first MAC CE may indicate at least one TCI state that corresponds to one codepoint corresponding to the TCI field of the DCI. It may be understood that the TCI field of one DCI may correspond to at least one codepoint.

The at least one codepoint corresponding to the TCI field refers to that, for example, in a case where the TCI field has 3 bits, the TCI field corresponds to 8 codepoints, and each codepoint may correspond to one or more TCI states.

In some implementations, the first indication information is joint indication information of a first MAC CE and first DCI; the first MAC CE indicates a TCI state corresponding to each codepoint of a plurality of codepoints in one DCI, and the plurality of codepoints include a first codepoint, and the first codepoint corresponds to the at least one first TCI state, and the first DCI indicates the first codepoint. Similarly, the plurality of codepoints may include a plurality of codepoints corresponding to the TCI field in the DCI.

At step 102, second indication information is received from the network device, in which the second indication information is configured for the terminal to determine that the PDSCH uses a target transmission manner.

In an embodiment of the disclosure, the terminal may receive the second indication information from the network device. The second indication information is configured for the terminal to determine that transmission of the PDSCH uses the target transmission manner. The terminal may determine that the PDSCH is delivered by using the target transmission manner based on the received second indication information.

Optionally, the target transmission manner may be coherent joint transmission (CJT).

Optionally, the second indication information is first RRC signaling and/or a second MAC CE.

In some implementations, the target transmission manner includes at least one of following features:
one CMR including at least two NZP CSI-RS resources;
sending, by the terminal, space domain (SD) basis vector information corresponding to each NZP CSI-RS to the network device;
sending, by the terminal, frequency domain (FD) basis vector information corresponding to each NZP CSI-RS to the network device;
sending, by the terminal, FD basis vector information corresponding to each CMR to the network device;
each NZP CSI-RS resource corresponding to one TRP; or
receiving, by the terminal, the PDSCH delivered by using the target transmission manner based on the at least one first TCI state.

The terminal sending the SD basis vector information corresponding to each NZP CSI-RS to the network device may refer to that, for each NZP CSI-RS resource in the CMR, the terminal selects a specified number of beams from a total of N1*N2 beams across CSI-RS antenna ports and feeds back the selected beams to the network device, where N1 denotes the number of antenna ports in a first dimension, and N2 denotes the number of antenna ports in a second dimension. Optionally, the terminal may report the SD basis vector information to the network device via a CSI feedback mechanism.

The terminal sending the FD basis vector information corresponding to each NZP CSI-RS to the network device may refer to that, for each NZP CSI-RS resource in the CMR, the terminal selects a specified number of FD basis vectors from N3 FD basis vectors and feeds back the selected FD basis vectors to the network device, where a value of N3 is a product of a number of CQI subbands and a number of PMI subbands. The number of PMI subbands refers to a number of PMI subbands included in each CQI subband. Optionally, the terminal may report the FD basis vector information to the network device via the CSI feedback mechanism.

The terminal sending the FD basis vector information corresponding to each CMR to the network device may refer to that, for each CMR, the terminal selects a specified number of FD basis vectors from the N3 FD basis vectors and feeds the selected FD basis vectors back to the network device. The FD basis vector information corresponding to each NZP CSI-RS resource in one CMR is the same. Optionally, the terminal may report the FD basis vector information to the network device via the CSI feedback mechanism.

It should be noted that values of the specified number of beams and the specified number of FD basis vectors may be configured by the network device and/or determined by the terminal. The network device may configure a same value for all NZP CSI-RSs in one CMR; or configure one value for each NZP CSI-RS in one CMR (i.e., respective NZP CSI-RSs in one CMR may correspond to the same or different values); or configure a total number for each CMR, such that the terminal determines the number corresponding to each NZP CSI-RS and reports the determined number to the network device.

At step 103, a second TCI state corresponding to the PDSCH delivered by using the target transmission manner is determined from the at least one first TCI state, in which the second TCI state is configured for the terminal to receive the PDSCH.

In an embodiment of the disclosure, the terminal may determine the second TCI state from the at least one first TCI state indicated by the first indication information. The second TCI state is a TCI state corresponding to the PDSCH delivered by using the target transmission manner and/or the DMRS thereof. The second TCI state is configured for the terminal to receive the PDSCH delivered by using the target transmission manner and/or the DMRS thereof.

In some implementations, the terminal may determine the second TCI state from the at least one first TCI state based on a first rule. The second TCI state includes one or more TCI states.

Optionally, the terminal may determine a TCI state located first in the at least one first TCI state as the second TCI state.

Optionally, the terminal may determine all TCI states in the at least one first TCI state as the second TCI state.

Optionally, the terminal may determine TCI states corresponding to N target NZP CSI-RS resources in the at least one first TCI state as the second TCI state, where N is a positive integer.

The N target NZP CSI-RS resources are NZP CSI-RS resources selected by the terminal for the target transmission manner.

The terminal may send a CSI report to the network device. The CSI report includes relevant information of the N target NZP CSI-RS resources. The CSI report may include at least one of:
indication information of the target NZP CSI-RS resource;
SD basis vector information corresponding to the target NZP CSI-RS resource;
FD basis vector information corresponding to the target NZP CSI-RS resource;
phase coefficient information corresponding to the target NZP CSI-RS resource; or
amplitude coefficient information corresponding to the target NZP CSI-RS resource.

The terminal may select which TRPs to be adopted to implement delivering the PDSCH by using the target transmission manner. Since each NZP CSI-RS corresponds to a different TRP, the terminal informs the network device of the selected TRPs by indicating the selected target NZP CSI-RS resources. In addition, for the selected target NZP CSI-RS resources, the terminal shall report relevant information to the network device. The relevant information includes at least one of the above SD basis vector information, the FD basis vector information, the phase coefficient information, or the amplitude coefficient information.

In some embodiments, the terminal may indicate the selected target NZP CSI-RS resources to the network device by using a bitmap. For example, each NZP CSI-RS resource corresponds to 1 bit, in a case where a certain bit in the bitmap is set as a designated value, such as "1", it is indicated that a NZP CSI-RS resource corresponding to the bit "1" is selected as the target NZP CSI-RS resource. Otherwise, it is indicated that the corresponding NZP CSI-RS resource is unselected, i.e., the corresponding NZP CSI-RS resource is not the target NZP CSI-RS resource.

Optionally, the designated value of the bit may also be "0". That is, a certain bit in the bitmap set as "0" indicates that a NZP CSI-RS resource corresponding to the bit is selected as the target NZP CSI-RS resource.

In some implementations, the terminal may receive third indication information from the network device, in which the third indication information indicates the second TCI state. The second TCI state includes one or more TCI states.

Optionally, the third indication information may be at least one of: second RRC signaling; a third MAC CE; or second DCI.

Optionally, the first indication information and the third indication information may be the same or different MAC CEs.

Optionally, the first indication information and the third indication information may be the same or different DCIs.

In some implementations, the terminal may further determine an identifier of at least one BWP and/or an identifier of at least one CC for which the second TCI state applies.

Optionally, the third indication information may further indicate at least one BWP and/or at least one CC. The at least one BWP and/or the at least one CC for which the second TCI state applies includes the at least one BWP and/or the at least one CC indicated by the third indication information.

Optionally, the third indication information may include the identifier of the at least one BWP and/or the identifier of the at least one CC indicated by the third indication information.

Optionally, the second TCI state applies for each CC in a first CC list and each BWP on a respective CC in response to the third indication information indicating one CC in the first CC list.

Optionally, the first indication information further indicates at least one BWP and/or at least one CC, and the second TCI state applies for the at least one BWP and/or the at least one CC indicated by the first indication information.

Optionally, the first indication information may include the identifier of the at least one BWP and/or the identifier of the at least one CC indicated by the first indication information.

Optionally, the second TCI state applies for each CC in a first CC list and a BWP on each CC in response to the first indication information indicating one CC in the first CC list.

Optionally, the first indication information and the third indication information may indicate the same BWP and/or the same CC.

In summary, the first indication information is received from the network device, in which the first indication information indicates the at least one first TCI state, the second indication information is received from the network device, in which the second indication information is configured for the terminal to determine that the PDSCH uses the target transmission manner; and the second TCI state corresponding to the PDSCH delivered by using the target transmission manner is determined from the at least one first TCI state, in which the second TCI state is configured for the terminal to receive the PDSCH. This enables that the terminal configured for multi-TRP transmission can determine the TCI state corresponding to the PDSCH using the target transmission manner in a case where the network device indicates a plurality of sets of TCI states, and complete transmission of the PDSCH, thereby increasing flexibility of the PDSCH transmission, and improving performance of the PDSCH transmission.

Referring to FIG. 2, FIG. 2 is a flow chart illustrating a method for PDSCH transmission provided in embodiments of the disclosure. It should be noted that the method for PDSCH transmission in embodiments of the disclosure is performed by a terminal. As shown in FIG. 2, the method may include the following steps 201 to 203.

At step 201, first indication information is received from the network device, in which the first indication information indicates at least one first TCI state.

In an embodiment of the disclosure, the terminal may receive the first indication information from the network device. The first indication information may indicate the at least one first TCI state.

Optionally, the first TCI state may be a joint TCI state and/or a DL TCI state. The joint TCI state may be configured for both UL and DL channels and/or reference signals of the terminal. The DL TCI state may be configured for a DL channel (including PDSCH and/or PDCCH) and/or a corresponding DMRS of the terminal. Optionally, the DL TCI state may also be configured for a CSI-RS.

In some implementations, the first indication information is a first MAC CE. The first MAC CE can indicate the at least one first TCI state, and the at least one first TCI state corresponds to one codepoint in one DCI.

The codepoint may be one codepoint corresponding to a TCI field of the DCI. That is, the first MAC CE may indicate at least one TCI state that corresponds to one codepoint corresponding to the TCI field of the DCI. It may be understood that the TCI field of one DCI may correspond to at least one codepoint.

The at least one codepoint corresponding to the TCI field refers to that, for example, in a case where the TCI field has 3 bits, the TCI field corresponds to 8 codepoints, and each codepoint may correspond to one or more TCI states.

In some implementations, the first indication information is joint indication information of a first MAC CE and first DCI; the first MAC CE indicates a TCI state corresponding to each codepoint of a plurality of codepoints in one DCI, and the plurality of codepoints include a first codepoint, and the first codepoint corresponds to the at least one first TCI state, and the first DCI indicates the first codepoint. Similarly, the plurality of codepoints may include a plurality of codepoints corresponding to the TCI field in the DCI.

At step 202, second indication information is received from the network device, in which the second indication information is configured for the terminal to determine that the PDSCH uses a target transmission manner.

In an embodiment of the disclosure, the terminal may receive the second indication information from the network device. The second indication information is configured for the terminal to determine that transmission of the PDSCH uses the target transmission manner.

Optionally, the target transmission manner may be CJT.

Optionally, the second indication information is first RRC signaling and/or a second MAC CE.

In some implementations, the target transmission manner includes at least one of following features:
one CMR including at least two NZP CSI-RS resources;
sending, by the terminal, SD basis vector information corresponding to each NZP CSI-RS to the network device;
sending, by the terminal, FD basis vector information corresponding to each NZP CSI-RS to the network device;
sending, by the terminal, FD basis vector information corresponding to each CMR to the network device;
each NZP CSI-RS resource corresponding to one TRP; or
receiving, by the terminal, the PDSCH delivered by using the target transmission manner based on the at least one TCI state.

The terminal sending the SD basis vector information corresponding to each NZP CSI-RS to the network device may refer to that, for each NZP CSI-RS resource in the CMR, the terminal selects a specified number of beams from a total of N1*N2 beams across CSI-RS antenna ports and feeds back the selected beams to the network device, where N1 denotes the number of antenna ports in a first dimension, and N2 denotes the number of antenna ports in a second dimension. Optionally, the terminal may report the SD basis vector information to the network device via a CSI feedback mechanism.

The terminal sending the FD basis vector information corresponding to each NZP CSI-RS to the network device may refer to that, for each NZP CSI-RS resource in the CMR, the terminal selects a specified number of FD basis vectors from N3 FD basis vectors and feeds back the selected FD basis vectors to the network device, where a value of N3 is a product of a number of CQI subbands and a number of PMI subbands. The number of PMI subbands refers to a number of PMI subbands included in each CQI subband. Optionally, the terminal may report the FD basis vector information to the network device via the CSI feedback mechanism.

The terminal sending the FD basis vector information corresponding to each CMR to the network device may refer to that, for each CMR, the terminal selects a specified number of FD basis vectors from the N3 FD basis vectors and feeds the selected FD basis vectors back to the network device. The FD basis vector information corresponding to each NZP CSI-RS resource in one CMR is the same. Optionally, the terminal may report the FD basis vector information to the network device via the CSI feedback mechanism.

It should be noted that values of the specified number of beams and the specified number of FD basis vectors may be configured by the network device and/or determined by the terminal. The network device may configure a same value for all NZP CSI-RSs in one CMR; or configure one value for each NZP CSI-RS in one CMR (i.e., respective NZP CSI-RSs in one CMR may correspond to the same or different values); or configure a total number for each CMR, such that the terminal determines the number corresponding to each NZP CSI-RS and reports the determined number to the network device.

At step 203, the second TCI state is determined from the at least one first TCI state based on a first rule, in which the second TCI state is configured for the terminal to receive the PDSCH delivered by using the target transmission manner.

In an embodiment of the disclosure, the terminal may determine the second TCI state from the at least one first TCI state indicated by the first indication information based on the first rule. The second TCI state is a TCI state corresponding to the PDSCH delivered by using the target transmission manner and/or the DMRS thereof. The second TCI state is configured for the terminal to receive the PDSCH delivered by using the target transmission manner and/or the DMRS thereof.

Optionally, the second TCI state includes one or more TCI states.

The terminal determining the second TCI state based on the first rule may include at least one of the following.

In some implementations, the terminal may determine a TCI state located first in the at least one first TCI state as the second TCI state.

In some implementations, the terminal may determine all TCI states in the at least one first TCI state as the second TCI state.

In some implementations, the terminal may determine TCI states corresponding to N target NZP CSI-RS resources in the at least one first TCI state as the second TCI state, where N is a positive integer.

The N target NZP CSI-RS resources are NZP CSI-RS resources selected by the terminal for the target transmission manner.

The terminal may send a CSI report to the network device. The CSI report includes relevant information of the N target NZP CSI-RS resources. The CSI report may include at least one of:
indication information of the target NZP CSI-RS resource;
SD basis vector information corresponding to the target NZP CSI-RS resource;
FD basis vector information corresponding to the target NZP CSI-RS resource;
phase coefficient information corresponding to the target NZP CSI-RS resource; or
amplitude coefficient information corresponding to the target NZP CSI-RS resource.

The terminal may select which TRPs to be adopted to implement delivering the PDSCH by using the target transmission manner. Since each NZP CSI-RS corresponds to a different TRP, the terminal informs the network device of the selected TRPs by indicating the selected target NZP CSI-RS resources. In addition, for the selected target NZP CSI-RS resources, the terminal shall report relevant information to the network device. The relevant information includes at least one of the above SD basis vector information, the FD basis vector information, the phase coefficient information, or the amplitude coefficient information.

In some embodiments, the terminal may indicate the selected target NZP CSI-RS resources to the network device by using a bitmap. For example, each NZP CSI-RS resource corresponds to 1 bit, in a case where a certain bit in the bitmap is set as a designated value, such as "1", it is indicated that a NZP CSI-RS resource corresponding to the bit "1" is selected as the target NZP CSI-RS resource. Otherwise, it is indicated that the corresponding NZP CSI-RS resource is unselected, i.e., the corresponding NZP CSI-RS resource is not the target NZP CSI-RS resource.

Optionally, the designated value of the bit may also be "0". That is, a certain bit in the bitmap set as "0" indicates that a NZP CSI-RS resource corresponding to the bit is selected as the target NZP CSI-RS resource.

In summary, the first indication information is received from the network device, in which the first indication information indicates the at least one first TCI state, the second indication information is received from the network device, in which the second indication information is configured for the terminal to determine that the PDSCH uses the target transmission manner; and the second TCI state corresponding to the PDSCH delivered by using the target transmission manner is determined from the at least one first TCI state based on the first rule, in which the second TCI state is configured for the terminal to receive the PDSCH. This enables that the terminal configured for multi-TRP transmission can determine the TCI state corresponding to the PDSCH using the target transmission manner in a case where the network device indicates a plurality of sets of TCI states, and complete transmission of the PDSCH, thereby increasing flexibility of the PDSCH transmission, and improving performance of the PDSCH transmission.

Referring to FIG. 3, FIG. 3 is a flow chart illustrating a method for PDSCH transmission provided in embodiments of the disclosure. It should be noted that the method for PDSCH transmission in embodiments of the disclosure is performed by a terminal. As shown in FIG. 3, the method may include the following steps 301 to 303.

At step 301, first indication information is received from the network device, in which the first indication information indicates at least one first TCI state.

In an embodiment of the disclosure, the terminal may receive the first indication information from the network device. The first indication information may indicate the at least one first TCI state.

Optionally, the first TCI state may be a joint TCI state and/or a DL TCI state. The joint TCI state may be configured for both UL and DL channels and/or reference signals of the terminal. The DL TCI state may be configured for a DL channel (including PDSCH and/or PDCCH) and/or a corresponding DMRS of the terminal. Optionally, the DL TCI state may also be configured for a CSI-RS.

In some implementations, the first indication information is a first MAC CE. The first MAC CE can indicate the at least one first TCI state, and the at least one first TCI state corresponds to one codepoint in one DCI.

The codepoint may be one codepoint corresponding to a TCI field of the DCI. That is, the first MAC CE may indicate at least one TCI state that corresponds to one codepoint corresponding to the TCI field of the DCI. It may be understood that the TCI field of one DCI may correspond to at least one codepoint.

The at least one codepoint corresponding to the TCI field refers to that, for example, in a case where the TCI field has 3 bits, the TCI field corresponds to 8 codepoints, and each codepoint may correspond to one or more TCI states.

In some implementations, the first indication information is joint indication information of a first MAC CE and first DCI; the first MAC CE indicates a TCI state corresponding to each codepoint of a plurality of codepoints in one DCI, and the plurality of codepoints include a first codepoint, and the first codepoint corresponds to the at least one first TCI state, and the first DCI indicates the first codepoint. Similarly, the plurality of codepoints may include a plurality of codepoints corresponding to the TCI field in the DCI.

At step 302, second indication information is received from the network device, in which the second indication information is configured for the terminal to determine that the PDSCH uses a target transmission manner.

In an embodiment of the disclosure, the terminal may receive the second indication information from the network device. The second indication information is configured for the terminal to determine that transmission of the PDSCH uses a target transmission manner.

Optionally, the target transmission manner may be CJT.

Optionally, the second indication information is first RRC signaling and/or a second MAC CE.

In some implementations, the target transmission manner includes at least one of following features:
one CMR including at least two NZP CSI-RS resources;
sending, by the terminal, SD basis vector information corresponding to each NZP CSI-RS to the network device;
sending, by the terminal, FD basis vector information corresponding to each NZP CSI-RS to the network device;
sending, by the terminal, FD basis vector information corresponding to each CMR to the network device;
each NZP CSI-RS resource corresponding to one TRP; or
receiving, by the terminal, the PDSCH delivered by using the target transmission manner based on the at least one TCI state.

The terminal sending the SD basis vector information corresponding to each NZP CSI-RS to the network device may refer to that, for each NZP CSI-RS resource in the CMR, the terminal selects a specified number of beams from a total of N1*N2 beams across CSI-RS antenna ports and feeds back the selected beams to the network device, where N1 denotes the number of antenna ports in a first dimension, and N2 denotes the number of antenna ports in a second dimension. Optionally, the terminal may report the SD basis vector information to the network device via a CSI feedback mechanism.

The terminal sending the FD basis vector information corresponding to each NZP CSI-RS to the network device may refer to that, for each NZP CSI-RS resource in the CMR, the terminal selects a specified number of FD basis vectors from N3 FD basis vectors and feeds back the selected FD basis vectors to the network device, where a value of N3 is a product of a number of CQI subbands and a number of PMI subbands. The number of PMI subbands refers to a number of PMI subbands included in each CQI subband. Optionally, the terminal may report the FD basis vector information to the network device via the CSI feedback mechanism.

The terminal sending the FD basis vector information corresponding to each CMR to the network device may refer to that, for each CMR, the terminal selects a specified number of FD basis vectors from the N3 FD basis vectors and feeds the selected FD basis vectors back to the network device. The FD basis vector information corresponding to each NZP CSI-RS resource in one CMR is the same. Optionally, the terminal may report the FD basis vector information to the network device via the CSI feedback mechanism.

It should be noted that values of the specified number of beams and the specified number of FD basis vectors may be configured by the network device and/or determined by the terminal. The network device may configure a same value for all NZP CSI-RSs in one CMR; or configure one value for each NZP CSI-RS in one CMR (i.e., respective NZP CSI-RSs in one CMR may correspond to the same or different values); or configure a total number for each CMR, such that the terminal determines the number corresponding to each NZP CSI-RS and reports the determined number to the network device.

At step 303, third indication information is received from the network device, in which the third indication information indicates the second TCI state, and the second TCI state is configured for the terminal to receive the PDSCH delivered by using the target transmission manner.

In an embodiment of the disclosure, the terminal may receive the third indication information from the network device. The third indication information indicates the second TCI state. The second TCI state is a TCI state corresponding to the PDSCH delivered by using the target transmission manner and/or the DMRS thereof. The second TCI state is configured for the terminal to receive the PDSCH delivered by using the target transmission manner and/or the DMRS thereof. The second TCI state is included in the at least one first TCI state.

Optionally, the second TCI state includes one or more TCI states.

Optionally, the third indication information may be at least one of: second RRC signaling; a third MAC CE; or second DCI.

In some implementations, the first indication information and the third indication information may be the same or different MAC CEs.

It may be understood that in response to the first indication information and the third indication information being the same MAC CE, the MAC CE may indicate the second TCI state corresponding to the PDSCH in addition to indicating the at least one first TCI state.

Optionally, the first indication information and the third indication information may be both unified TCI state activation/deactivation MAC CEs.

In some implementations, the first indication information and the third indication information are the same or different DCIs.

Optimally, the first indication information and the third indication information are both DCI excluding downlink scheduling information;
the first indication information and the third indication information are both DCI including the downlink scheduling information;
the first indication information is the DCI including the downlink scheduling information, and the third indication information is the DCI excluding the downlink scheduling information; or
the first indication information is the DCI excluding the downlink scheduling information, and the third indication information is the DCI including the downlink scheduling information.

Optionally, the DCI excluding the downlink scheduling information may be DCI format 1_1 without DL assignment, or DCI format 1_2 without DL assignment.

Optionally, the DCI including the downlink scheduling information may be DCI format 1_1 with DL assignment, or DCI format 1_2 with DL assignment.

Optionally, in response to the third indication information being the DCI excluding the downlink scheduling information, the third indication information may use an indication field different from the TCI field in the DCI format 1_1 without DL assignment or DCI format 1_2 without DL assignment, or other newly defined indication field.

Optionally, in response to the third indication information being the DCI including the downlink scheduling information, the third indication information may use an indication field different from the TCI field in the DCI format 1_1 with DL assignment or DCI format 1_2 with DL assignment, or other newly defined indication field.

In some implementations, the terminal may further determine an identifier of at least one BWP and/or an identifier of at least one CC for which the second TCI state applies.

Optionally, the third indication information may further indicate at least one BWP and/or at least one CC. The terminal may determines that the at least one BWP and/or the at least one CC for which the second TCI state applies includes the at least one BWP and/or the at least one CC indicated by the third indication information.

Optionally, the third indication information may include the identifier of the at least one BWP and/or the identifier of the at least one CC indicated by the third indication information.

Optionally, the first indication information further indicates at least one BWP and/or at least one CC, and the second TCI state applies for the at least one BWP and/or the at least one CC indicated by the first indication information (i.e., the identifier of the BWP for which the second TCI state applies may not need to be determined).

Optionally, the first indication information further indicates at least one BWP and/or at least one CC, and the second TCI state applies for the at least one BWP and/or the at least one CC indicated by the first indication information.

Optionally, the first indication information may include the identifier of the at least one BWP and/or the identifier of the at least one CC indicated by the first indication information.

Optionally, the second TCI state applies for each CC in a first CC list and each BWP on a respective CC in response to the first indication information indicating one CC in the first CC list.

Optionally, the first indication information and the third indication information may indicate the same BWP and/or the same CC.

In summary, the first indication information is received from the network device, in which the first indication information indicates the at least one first TCI state, the second indication information is received from the network device, in which the second indication information is configured for the terminal to determine that the PDSCH uses the target transmission manner, the third indication information is received from the network device, in which the third indication information indicates the second TCI state, and the second TCI state is configured for the terminal to receive the PDSCH delivered by using the target transmission manner. This enables that the terminal configured for multi-TRP transmission can determine the TCI state corresponding to the PDSCH using the target transmission manner in a case where the network device indicates a plurality of sets of TCI states, and complete transmission of the PDSCH, thereby increasing flexibility of the PDSCH transmission, and improving performance of the PDSCH transmission.

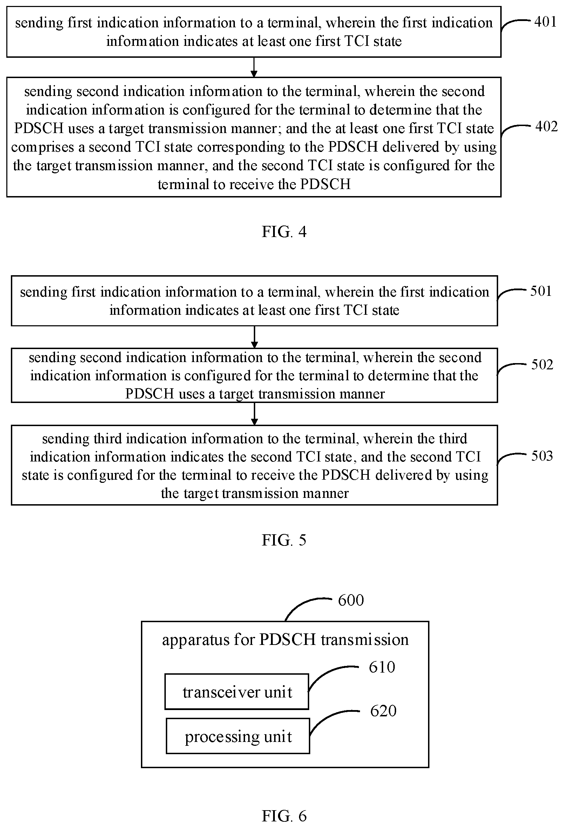

Referring to FIG. 4, FIG. 4 is a flow chart illustrating a method for PDSCH transmission provided in embodiments of the disclosure. It should be noted that the method for PDSCH transmission in embodiments of the disclosure is performed by a network device. As shown in FIG. 4, the method may include the following steps 401 to 402.

At step 401, first indication information is sent to a terminal, in which the first indication information indicates at least one first TCI state.

In an embodiment of the disclosure, the network device may send the first indication information to the terminal. The first indication information may indicate the at least one first TCI state.

Optionally, the first TCI state may be a joint TCI state and/or a DL TCI state. The joint TCI state may be configured for both UL and DL channels and/or reference signals of the terminal. The DL TCI state may be configured for a DL channel (including PDSCH and/or PDCCH) and/or a corresponding DMRS of the terminal. Optionally, the DL TCI state may also be configured for a CSI-RS.

In some implementations, the first indication information is a first MAC CE. The first MAC CE can indicate the at least one first TCI state, and the at least one first TCI state corresponds to one codepoint in one DCI.

The codepoint may be one codepoint corresponding to a TCI field of the DCI. That is, the first MAC CE may indicate at least one TCI state that corresponds to one codepoint corresponding to the TCI field of the DCI. It may be understood that the TCI field of one DCI may correspond to at least one codepoint.

The at least one codepoint corresponding to the TCI field refers to that, for example, in a case where the TCI field has 3 bits, the TCI field corresponds to 8 codepoints, and each codepoint may correspond to one or more TCI states.

In some implementations, the first indication information is joint indication information of a first MAC CE and first DCI; the first MAC CE indicates a TCI state corresponding to each codepoint of a plurality of codepoints in one DCI, and the plurality of codepoints include a first codepoint, and the first codepoint corresponds to the at least one first TCI state, and the first DCI indicates the first codepoint. Similarly, the plurality of codepoints may include a plurality of codepoints corresponding to the TCI field in the DCI.

At step 402, second indication information is sent to the terminal, in which the second indication information is configured for the terminal to determine that the PDSCH uses a target transmission manner; and the at least one first TCI state includes a second TCI state corresponding to the PDSCH delivered by using the target transmission manner, and the second TCI state is configured for the terminal to receive the PDSCH.

In an embodiment of the disclosure, the network device may send the second indication information to the terminal. The second indication information is configured for the terminal to determine that transmission of the PDSCH uses the target transmission manner. The terminal may determine that the PDSCH is delivered by using the target transmission manner based on the received second indication information.

Optionally, the target transmission manner may be CJT.

Optionally, the second indication information is first RRC signaling and/or a second MAC CE.

In some implementations, the target transmission manner includes at least one of following features:
one CMR including at least two NZP CSI-RS resources;
sending, by the terminal, SD basis vector information corresponding to each NZP CSI-RS to the network device;
sending, by the terminal, FD basis vector information corresponding to each NZP CSI-RS to the network device;
sending, by the terminal, FD basis vector information corresponding to each CMR to the network device;
each NZP CSI-RS resource corresponding to one TRP; or
receiving, by the terminal, the PDSCH delivered by using the target transmission manner based on the at least one first TCI state.

The terminal sending the SD basis vector information corresponding to each NZP CSI-RS to the network device may refer to that, for each NZP CSI-RS resource in the CMR, the terminal selects a specified number of beams from a total of N1*N2 beams across CSI-RS antenna ports and feeds back the selected beams to the network device, where N1 denotes the number of antenna ports in a first dimension, and N2 denotes the number of antenna ports in a second dimension. Optionally, the terminal may report the SD basis vector information to the network device via a CSI feedback mechanism.

The terminal sending the FD basis vector information corresponding to each NZP CSI-RS to the network device may refer to that, for each NZP CSI-RS resource in the CMR, the terminal selects a specified number of FD basis vectors from N3 FD basis vectors and feeds back the selected FD basis vectors to the network device, where a value of N3 is a product of a number of CQI subbands and a number of PMI subbands. The number of PMI subbands refers to a number of PMI subbands included in each CQI subband. Optionally, the terminal may report the FD basis vector information to the network device via the CSI feedback mechanism.

The terminal sending the FD basis vector information corresponding to each CMR to the network device may refer to that, for each CMR, the terminal selects a specified number of FD basis vectors from the N3 FD basis vectors and feeds the selected FD basis vectors back to the network device. The FD basis vector information corresponding to each NZP CSI-RS resource in one CMR is the same. Optionally, the terminal may report the FD basis vector information to the network device via the CSI feedback mechanism.

It should be noted that values of the specified number of beams and the specified number of FD basis vectors may be configured by the network device and/or determined by the terminal. The network device may configure a same value for all NZP CSI-RSs in one CMR; or configure one value for each NZP CSI-RS in one CMR (i.e., respective NZP CSI-RSs in one CMR may correspond to the same or different values); or configure a total number for each CMR, such that the terminal determines the number corresponding to each NZP CSI-RS and reports the determined number to the network device.

In an embodiment of the disclosure, the at least one first TCI state includes a second TCI state. The second TCI state is the TCI state corresponding to the PDSCH delivered by using the target transmission manner and/or the DMRS thereof. The second TCI state is configured for the terminal to receive the PDSCH and/or the DMRS thereof.

In some implementations, the second TCI state is determined by the terminal based on a first rule and the at least one first TCI state.

Optionally, the second TCI state includes at least one of:
a TCI state located first in the at least one first TCI state;
each TCI state in the at least one first TCI state; or
TCI states corresponding to N target NZP CSI-RS resources in the at least one first TCI state, where N is a positive integer.

The N target NZP CSI-RS resources are NZP CSI-RS resources selected by the terminal for the target transmission manner.

The network device may receive a CSI report from the terminal. The CSI report includes relevant information of the N target NZP CSI-RS resources. The CSI report may include at least one of:
indication information of the target NZP CSI-RS resource;
SD basis vector information corresponding to the target NZP CSI-RS resource;
FD basis vector information corresponding to the target NZP CSI-RS resource;
phase coefficient information corresponding to the target NZP CSI-RS resource; or
amplitude coefficient information corresponding to the target NZP CSI-RS resource.

TThe terminal may select which TRPs to be adopted to implement delivering the PDSCH by using the target transmission manner. Since each NZP CSI-RS corresponds to a different TRP, the terminal informs the network device of the selected TRPs by indicating the selected target NZP CSI-RS resources. In addition, for the selected target NZP CSI-RS resources, the terminal shall report the selected NZP CSI-RS resources and relevant information to the network device. The relevant information includes at least one of: the above SD basis vector information, the FD basis vector information, the phase coefficient information, or the amplitude coefficient information.

In some embodiments, the terminal may indicate the selected target NZP CSI-RS resources to the network device by using a bitmap. For example, each NZP CSI-RS resource corresponds to 1 bit, in a case where a certain bit in the bitmap is set as a designated value, such as "1", it is indicated that a NZP CSI-RS resource corresponding to the bit "1" is selected as the target NZP CSI-RS resource. Otherwise, it is indicated that the corresponding NZP CSI-RS resource is unselected, i.e., the corresponding NZP CSI-RS resource is not the target NZP CSI-RS resource.

Optionally, the designated value of the bit may also be "0". That is, a certain bit in the bitmap set as "0" indicates that a NZP CSI-RS resource corresponding to the bit is selected as the target NZP CSI-RS resource.

In some implementations, the network device may send third indication information to the terminal, in which the third indication information indicates the second TCI state. The second TCI state includes one or more TCI states.

Optionally, the third indication information may be at least one of: second RRC signaling; a third MAC CE; or second DCI.

Optionally, the first indication information and the third indication information may be the same or different MAC CEs.

Optionally, the first indication information and the third indication information may be the same or different DCIs.

In some implementations, the terminal may further determine an identifier of at least one BWP and/or an identifier of at least one CC for which the second TCI state applies.

Optionally, the third indication information may further indicate at least one BWP and/or at least one CC. The at least one BWP and/or the at least one CC for which the second TCI state applies includes the at least one BWP and/or the at least one CC indicated by the third indication information.

Optionally, the third indication information may include the identifier of the at least one BWP and/or the identifier of the at least one CC indicated by the third indication information.

Optionally, the second TCI state applies for each CC in a first CC list and each BWP on a respective CC in response to the third indication information indicating one CC in the first CC list.

Optionally, the first indication information further indicates at least one BWP and/or at least one CC, and the second TCI state applies for the at least one BWP and/or the at least one CC indicated by the first indication information.

Optionally, the first indication information may include the identifier of the at least one BWP and/or the identifier of the at least one CC indicated by the first indication information.

Optionally, the second TCI state applies for each CC in a first CC list and a BWP on each CC in response to the first indication information indicating one CC in the first CC list.

Optionally, the first indication information and the third indication information may indicate the same BWP and/or the same CC.

In summary, the first indication information is sent to the terminal, in which the first indication information indicates the at least one first TCI state, the second indication information is sent to the terminal, in which the second indication information is configured for the terminal to determine that the PDSCH uses the target transmission manner; and the at least one first TCI state includes the second TCI state corresponding to the PDSCH delivered by using the target transmission manner, and the second TCI state is configured for the terminal to receive the PDSCH. This enables that the terminal configured for multi-TRP transmission can determine the TCI state corresponding to the PDSCH using the target transmission manner in a case where the network device indicates a plurality of sets of TCI states, and complete transmission of the PDSCH, thereby increasing flexibility of the PDSCH transmission, and improving performance of the PDSCH transmission.

Referring to FIG. 5, FIG. 5 is a flow chart illustrating a method for PDSCH transmission provided in embodiments of the disclosure. It should be noted that the method for PDSCH transmission in embodiments of the disclosure is performed by a network device. As shown in FIG. 5, the method may include the following steps 501 to 503.

At step 501, first indication information is sent to the terminal, in which the first indication information indicates at least one first TCI state.

In an embodiment of the disclosure, the network device may send the first indication information to the terminal. The first indication information may indicate the at least one first TCI state.

Optionally, the first TCI state may be a joint TCI state and/or a DL TCI state. The joint TCI state may be configured for both UL and DL channels and/or reference signals of the terminal. The DL TCI state may be configured for a DL channel (including PDSCH and/or PDCCH) and/or a corresponding DMRS of the terminal. Optionally, the DL TCI state may also be configured for a CSI-RS.

In some implementations, the first indication information is a first MAC CE. The first MAC CE can indicate the at least one first TCI state, and the at least one first TCI state corresponds to one codepoint in one DCI.

The codepoint may be one codepoint corresponding to a TCI field of the DCI. That is, the first MAC CE may indicate at least one TCI state that corresponds to one codepoint corresponding to the TCI field of the DCI. It may be understood that the TCI field of one DCI may correspond to at least one codepoint.

The at least one codepoint corresponding to the TCI field refers to that, for example, in a case where the TCI field has 3 bits, the TCI field corresponds to 8 codepoints, and each codepoint may correspond to one or more TCI states.

In some implementations, the first indication information is joint indication information of a first MAC CE and first DCI; the first MAC CE indicates a TCI state corresponding to each codepoint of a plurality of codepoints in one DCI, and the plurality of codepoints include a first codepoint, and the first codepoint corresponds to the at least one first TCI state, and the first DCI indicates the first codepoint. Similarly, the plurality of codepoints may include a plurality of codepoints corresponding to the TCI field in the DCI.

At step 502, second indication information is sent to the terminal, in which the second indication information is configured for the terminal to determine that the PDSCH uses a target transmission manner.

In an embodiment of the disclosure, the network device may send the second indication information to the terminal. The second indication information is configured for the terminal to determine that the PDSCH uses the target transmission manner.

Optionally, the target transmission manner may be CJT.

Optionally, the second indication information is first RRC signaling and/or a second MAC CE.

In some implementations, the target transmission manner includes at least one of following features:
one CMR including at least two NZP CSI-RS resources;
sending, by the terminal, SD basis vector information corresponding to each NZP CSI-RS to the network device;
sending, by the terminal, FD basis vector information corresponding to each NZP CSI-RS to the network device;
sending, by the terminal, FD basis vector information corresponding to each CMR to the network device;
each NZP CSI-RS resource corresponding to one TRP; or
receiving, by the terminal, the PDSCH delivered by using the target transmission manner based on the at least one TCI state.

The terminal sending the SD basis vector information corresponding to each NZP CSI-RS to the network device may refer to that, for each NZP CSI-RS resource in the CMR, the terminal selects a specified number of beams from a total of N1*N2 beams across CSI-RS antenna ports and feeds back the selected beams to the network device, where N1 denotes the number of antenna ports in a first dimension, and N2 denotes the number of antenna ports in a second dimension. Optionally, the terminal may report the SD basis vector information to the network device via a CSI feedback mechanism.

The terminal sending the FD basis vector information corresponding to each NZP CSI-RS to the network device may refer to that, for each NZP CSI-RS resource in the CMR, the terminal selects a specified number of FD basis vectors from N3 FD basis vectors and feeds back the selected FD basis vectors to the network device, where a value of N3 is a product of a number of CQI subbands and a number of PMI subbands. The number of PMI subbands refers to a number of PMI subbands included in each CQI subband. Optionally, the terminal may report the FD basis vector information to the network device via the CSI feedback mechanism.

The terminal sending the FD basis vector information corresponding to each CMR to the network device may refer to that, for each CMR, the terminal selects a specified number of FD basis vectors from the N3 FD basis vectors and feeds the selected FD basis vectors back to the network device. The FD basis vector information corresponding to each NZP CSI-RS resource in one CMR is the same. Optionally, the terminal may report the FD basis vector information to the network device via the CSI feedback mechanism.

It should be noted that values of the specified number of beams and the specified number of FD basis vectors may be configured by the network device. The network device may configure a same value for all NZP CSI-RSs in one CMR; or configure one value for each NZP CSI-RS in one CMR (i.e., respective NZP CSI-RSs in one CMR may correspond to the same or different values); or configure a total number for each CMR, such that the terminal determines the number corresponding to each NZP CSI-RS and reports the determined number to the network device.

At step 503, third indication information is sent to the terminal, in which the third indication information indicates the second TCI state, and the second TCI state is configured for the terminal to receive the PDSCH delivered by using the target transmission manner.

In an embodiment of the disclosure, the network device may send the third indication information to the terminal. The third indication information indicates the second TCI state. The second TCI state is a TCI state corresponding to the PDSCH delivered by using the target transmission manner and/or the DMRS thereof. The second TCI state is configured for the terminal to receive the PDSCH delivered by using the target transmission manner and/or the DMRS thereof. The second TCI state is included in the at least one first TCI state.

Optionally, the second TCI state includes one or more TCI states.

Optionally, the third indication information may be at least one of: second RRC signaling; a third MAC CE; or second DCI.

In some implementations, the first indication information and the third indication information may be the same or different MAC CEs.

It may be understood that in response to the first indication information and the third indication information being the same MAC CE, the MAC CE may indicate the second TCI state corresponding to the PDSCH in addition to indicating the at least one first TCI state.

Optionally, the first indication information and the third indication information may be both unified TCI state activation/deactivation MAC CEs.

In some implementations, the first indication information and the third indication information are the same or different DCIs.

Optimally, the first indication information and the third indication information are both DCI excluding downlink scheduling information;
the first indication information and the third indication information are both DCI including the downlink scheduling information;
the first indication information is the DCI including the downlink scheduling information, and the third indication information is the DCI excluding the downlink scheduling information; or
the first indication information is the DCI excluding the downlink scheduling information, and the third indication information is the DCI including the downlink scheduling information.

Optionally, the DCI excluding the downlink scheduling information may be DCI format 1_1 without DL assignment, or DCI format 1_2 without DL assignment.

Optionally, the DCI including the downlink scheduling information may be DCI format 1_1 with DL assignment, or DCI format 1_2 with DL assignment.

Optionally, in response to the third indication information being the DCI excluding the downlink scheduling information, the third indication information may use an indication field different from the TCI field in the DCI format 1_1 without DL assignment or DCI format 1_2 without DL assignment, or other newly defined indication field.

Optionally, in response to the third indication information being the DCI including the downlink scheduling information, the third indication information may use an indication field different from the TCI field in the DCI format 1_1 with DL assignment or DCI format 1_2 with DL assignment, or other newly defined indication field.

In some implementations, the terminal may further determine an identifier of at least one BWP and/or an identifier of at least one CC for which the second TCI state applies.

Optionally, the third indication information may further indicate at least one BWP and/or at least one CC. The at least one BWP and/or the at least one CC for which the second TCI state applies includes the at least one BWP and/or the at least one CC indicated by the third indication information.

Optionally, the third indication information may include the identifier of the at least one BWP and/or the identifier of the at least one CC indicated by the third indication information.

Optionally, the first indication information further indicates at least one BWP and/or at least one CC, and the second TCI state applies for the at least one BWP and/or the at least one CC indicated by the first indication information (i.e., the identifier of the BWP for which the second TCI state applies may not need to be determined).

Optionally, the first indication information further indicates at least one BWP and/or at least one CC, and the second TCI state applies for the at least one BWP and/or the at least one CC indicated by the first indication information.

Optionally, the first indication information may include the identifier of the at least one BWP and/or the identifier of the at least one CC indicated by the first indication information.

Optionally, the second TCI state applies for each CC in a first CC list and each BWP on a respective CC in response to the first indication information indicating one CC in the first CC list.

Optionally, the first indication information and the third indication information may indicate the same BWP and/or the same CC.

In summary, the first indication information is sent to the terminal, in which the first indication information indicates the at least one first TCI state; the second indication information is sent to the terminal, in which the second indication information is configured for the terminal to determine that the PDSCH uses the target transmission manner; and the third indication information is sent to the terminal, in which the third indication information indicates the second TCI state, and the second TCI state is configured for the terminal to receive the PDSCH delivered by using the target transmission manner. This enables that the terminal configured for multi-TRP transmission can determine the TCI state corresponding to the PDSCH using the target transmission manner in a case where the network device indicates a plurality of sets of TCI states, and complete transmission of the PDSCH, thereby increasing flexibility of the PDSCH transmission, and improving performance of the PDSCH transmission.

Corresponding to the method for PDSCH transmission provided in the embodiments described above, the disclosure also provides an apparatus for PDSCH transmission. Since the apparatus for PDSCH transmission provided in embodiments of the disclosure corresponds to the methods provided in the embodiments described above, the implementation of the method for PDSCH transmission is also applicable to the apparatus for PDSCH transmission provided in the following embodiments, which will not be described in detail in the following embodiments.

Referring to FIG. 6, FIG. 6 is a structural block diagram illustrating an apparatus for PDSCH transmission provided in embodiments of the disclosure.

As shown in FIG. 6, the apparatus 600 for PDSCH transmission includes: a transceiver unit 610 and a processing unit 620.

The transceiver unit 610 is configured to receive first indication information from a network device, in which the first indication information indicates at least one first TCI state.

The transceiver unit 610 is further configured to receive second indication information from the network device, in which the second indication information is configured for the terminal to determine that the PDSCH uses a target transmission manner.

The processing unit 620 is configured to determine a second TCI state corresponding to the PDSCH delivered by using the target transmission manner from the at least one first TCI state, in which the second TCI state is configured for the terminal to receive the PDSCH.

Optionally, the first indication information is a first MAC CE; and the first MAC CE indicates the at least one first TCI state, and the at least one first TCI state corresponds to one codepoint in DCI.

Optionally, the first indication information is joint indication information of a first MAC CE and first DCI; the first MAC CE indicates a TCI state corresponding to each codepoint of a plurality of codepoints, and the plurality of codepoints include a first codepoint corresponding to the at least one first TCI state; and the first DCI indicates the first codepoint

Optionally, the target transmission manner includes at least one of following features: one CMR including at least two NZP CSI-RS resources; sending, by the terminal, SD basis vector information corresponding to each NZP CSI-RS to the network device; sending, by the terminal, FD basis vector information corresponding to each NZP CSI-RS to the network device; sending, by the terminal, FD basis vector information corresponding to each CMR to the network device; each NZP CSI-RS resource corresponding to one TRP; or receiving, by the terminal, the PDSCH delivered by using the target transmission manner based on the at least one first TCI state.

Optionally, the second indication information is first RRC signaling and/or a second MAC CE.

Optionally, the processing unit 620 is specifically configured to determine the second TCI state from the at least one first TCI state based on a first rule.

Optionally, the processing unit 620 is specifically configured to perform at least one of: determine a TCI state located first in the at least one first TCI state as the second TCI state; determine all TCI states in the at least one first TCI state as the second TCI state; or determine TCI states corresponding to N target NZP CSI-RS resources in the at least one first TCI state as the second TCI state, where N is a positive integer.

Optionally, the N target NZP CSI-RS resources are NZP CSI-RS resources selected by the terminal for the target transmission manner.

Optionally, the transceiver unit 610 is specifically configured to send a CSI report to the network device, in which the CSI report includes at least one of: indication information of the target NZP CSI-RS resource; SD basis vector information corresponding to the target NZP CSI-RS resource; FD basis vector information corresponding to the target NZP CSI-RS resource; phase coefficient information corresponding to the target NZP CSI-RS resource; or amplitude coefficient information corresponding to the target NZP CSI-RS resource.

Optionally, the processing unit 620 is specifically configured to receive third indication information from the network device, in which the third indication information indicates the second TCI state, and the second TCI state includes one or more TCI states.

Optionally, the third indication information is at least one of: second RRC signaling; a third MAC CE; or second DCI.

Optionally, the first indication information and the third indication information are the same or different MAC CEs.

Optionally, the first indication information and the third indication information are both unified TCI state activation/deactivation MAC CEs.

Optionally, the first indication information and the third indication information are the same or different DCIs.

Optionally, the first indication information and the third indication information are both DCI excluding downlink scheduling information; the first indication information and the third indication information are both DCI including the downlink scheduling information; the first indication information is the DCI including the downlink scheduling information, and the third indication information is the DCI excluding the downlink scheduling information; or the first indication information is the DCI excluding the downlink scheduling information, and the third indication information is the DCI including the downlink scheduling information.

Optionally, the processing unit 620 is specifically configured to determine an identifier of at least one BWP and/or an identifier of at least one CC for which the second TCI state applies.

Optionally, the third indication information further indicates at least one BWP and/or at least one CC; the at least one BWP and/or the at least one CC for which the second TCI state applies includes the at least one BWP and/or the at least one CC indicated by the third indication information.

Optionally, the second TCI state applies for each CC in a first CC list and each BWP on a respective CC in response to the third indication information indicating one CC in the first CC list.

Optionally, the first indication information further indicates at least one BWP and/or at least one CC, and the second TCI state applies for the at least one BWP and/or the at least one CC indicated by the first indication information.

Optionally, the second TCI state applies for each CC in a first CC list and each BWP on a respective CC in response to the first indication information indicating one CC in the first CC list.

In the apparatus for PDSCH transmission of the present embodiment, the first indication information is received from the network device, in which the first indication information indicates the at least one first TCI state, the second indication information is received from the network device, in which the second indication information is configured for the terminal to determine that the PDSCH uses the target transmission manner; and the second TCI state corresponding to the PDSCH delivered by using the target transmission manner is determined from the at least one first TCI state, in which the second TCI state is configured for the terminal to receive the PDSCH. This enables that the terminal configured for multi-TRP transmission can determine the TCI state corresponding to the PDSCH using the target transmission manner in a case where the network device indicates a plurality of sets of TCI states, and complete transmission of the PDSCH, thereby increasing flexibility of the PDSCH transmission, and improving performance of the PDSCH transmission.

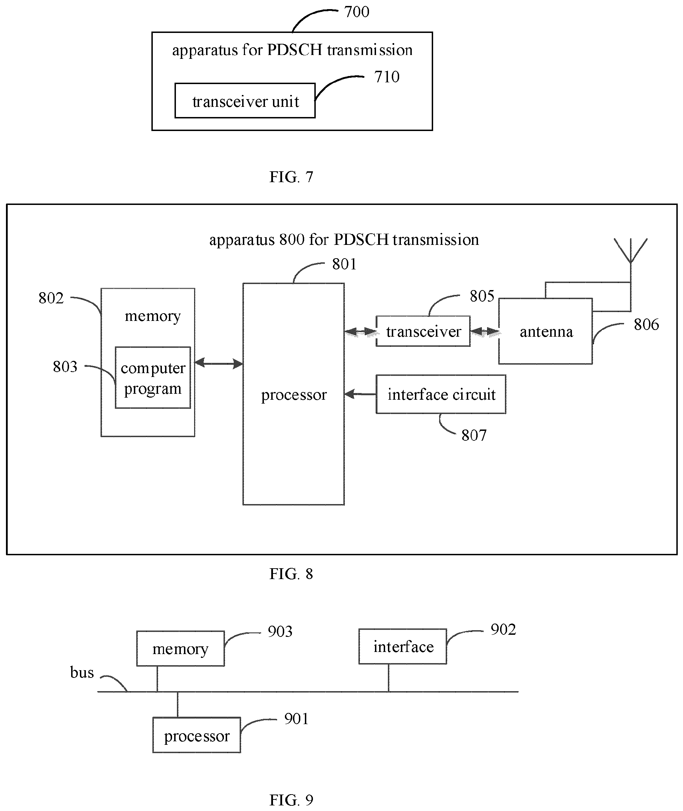

Referring to FIG. 7, FIG. 7 is a structural block diagram illustrating an apparatus for PDSCH transmission provided in embodiments of the disclosure.

As shown in FIG. 7, the apparatus 700 for PDSCH transmission includes: a transceiver unit 710.

The transceiver unit 710 is configured to send first indication information to a terminal, in which the first indication information indicates at least one first TCI state.

The transceiver unit 710 is further configured to send second indication information to the terminal, in which the second indication information is configured for the terminal to determine that the PDSCH uses a target transmission manner.

The at least one first TCI state includes a second TCI state corresponding to the PDSCH delivered by using the target transmission manner, and the second TCI state is configured for the terminal to receive the PDSCH.

Optionally, the first indication information is a first MAC CE; in which the first MAC CE indicates the at least one first TCI state, and the at least one first TCI state corresponds to one codepoint in DCI.

Optionally, the first indication information is joint indication information of a first MAC CE and first DCI; the first MAC CE indicates a TCI state corresponding to each codepoint of a plurality of codepoints, and the plurality of codepoints include a first codepoint corresponding to the at least one first TCI state; and the first DCI indicates the first codepoint.

Optionally, the target transmission manner includes at least one of following features: one CMR including at least two NZP CSI-RS resources; sending, by the terminal, SD basis vector information corresponding to each NZP CSI-RS to the network device; sending, by the terminal, FD basis vector information corresponding to each NZP CSI-RS to the network device; sending, by the terminal, FD basis vector information corresponding to each CMR to the network device; each NZP CSI-RS resource corresponding to one TRP; or receiving, by the terminal, the PDSCH delivered by using the target transmission manner based on the at least one first TCI state.

Optionally, the second indication information is first RRC signaling and/or a second MAC CE.

Optionally, the second TCI state is determined by the terminal based on a first rule and the at least one first TCI state.

Optionally, the second TCI state includes at least one of: a TCI state located first in the at least one first TCI state; each TCI state in the at least one first TCI state; or TCI states corresponding to N target NZP CSI-RS resources in the at least one first TCI state, where N is a positive integer.

Optionally, the N target NZP CSI-RS resources are NZP CSI-RS resources selected by the terminal for the target transmission manner.

Optionally, the transceiver unit 710 is further configured to receive a CSI report from the terminal, in which the CSI report includes at least one of: indication information of the target NZP CSI-RS resource; SD basis vector information corresponding to the target NZP CSI-RS resource; FD basis vector information corresponding to the target NZP CSI-RS resource; phase coefficient information corresponding to the target NZP CSI-RS resource; or amplitude coefficient information corresponding to the target NZP CSI-RS resource.

Optionally, the transceiver unit 710 is further configured to: send third indication information to the terminal, in which the third indication information indicates the second TCI state, and the second TCI state includes one or more TCI states.

Optionally, the third indication information is at least one of: second RRC signaling; a third MAC CE; or second DCI.

Optionally, the first indication information and the third indication information are the same or different MAC CEs.

Optionally, the first indication information and the third indication information are both unified TCI state activation/deactivation MAC CEs.

Optionally, the first indication information and the third indication information are the same or different DCIs.

Optionally, the first indication information and the third indication information are both DCI excluding downlink scheduling information; the first indication information and the third indication information are both DCI including the downlink scheduling information; the first indication information is the DCI including the downlink scheduling information, and the third indication information is the DCI excluding the downlink scheduling information; or the first indication information is the DCI excluding the downlink scheduling information, and the third indication information is the DCI including the downlink scheduling information.

Optionally, the method further includes: determining an identifier of at least one BWP and/or an identifier of at least one CC for which the second TCI state applies.

Optionally, the third indication information further indicates at least one BWP and/or at least one CC; the at least one BWP and/or the at least one CC for which the second TCI state applies includes the at least one BWP and/or the at least one CC indicated by the third indication information.

Optionally, the second TCI state applies for each CC in a first CC list and each BWP on a respective CC in response to the third indication information indicating one CC in the first CC list.

Optionally, the first indication information further indicates at least one BWP and/or at least one CC, and the second TCI state applies for the at least one BWP and/or the at least one CC indicated by the first indication information.

Optionally, the second TCI state applies for each CC in a first CC list and each BWP on a respective CC in response to the first indication information indicating one CC in the first CC list.

In the apparatus for PDSCH transmission of the present embodiment, the first indication information is to the terminal, in which the first indication information indicates at least one first TCI state, and send the second indication information to the terminal, in which the second indication information is configured for the terminal to determine that the PDSCH uses the target transmission manner; and the at least one first TCI state includes a second TCI state corresponding to the PDSCH delivered by using the target transmission manner, and the second TCI state is configured for the terminal to receive the PDSCH. This enables that the terminal configured for multi-TRP transmission can determine the TCI state corresponding to the PDSCH using the target transmission manner in a case where the network device indicates a plurality of sets of TCI states, and complete transmission of the PDSCH, thereby increasing flexibility of the PDSCH transmission, and improving performance of the PDSCH transmission.

In order to implement the above embodiments, embodiments of the disclosure further provide a communication device. The communication device includes a processor and a memory. The memory is stored with a computer program; and the processor executes the computer program stored in the memory, so that the communication device performs the method illustrated in the embodiments of FIG. 1 to FIG. 3.

In order to implement the above embodiments, embodiments of the disclosure further provide a communication device. The communication device includes a processor and a memory. The memory is stored with a computer program; and the processor executes the computer program stored in the memory, so that the communication device performs the method illustrated in the embodiments of FIG. 4 to FIG. 5.

In order to implement the above embodiments, embodiments of the disclosure further provide a communication device. The communication device includes a processor and an interface circuit. The interface circuit is configured to receive code instructions and transmit the code instructions to the processor; and the processor is configured to run the code instructions so that the device performs the method illustrated in the embodiments of FIG. 1 to FIG. 3.

In order to implement the above embodiments, embodiments of the disclosure further provide a communication device. The communication device includes a processor and an interface circuit. The interface circuit is configured to receive code instructions and transmit the code instructions to the processor; and the processor is configured to run the code instructions so that the device performs the method illustrated in the embodiments of FIG. 4 to FIG. 5.

Referring to FIG. 8, it is a structural block diagram illustrating another apparatus for PDSCH transmission provided in embodiments of the disclosure. The apparatus 800 may be a network device, a terminal, or a chip, a system on chip or a processor that supports the network device to implement the method, or a chip, a system on chip or a processor that supports the terminal to implement the method. The device may be configured to implement the method described in the method embodiments, and may refer to descriptions in the method embodiments.

The apparatus 800 may include one or more processors 801. The processor 801 may include a general purpose processor or a dedicated processor. For example, the processor 801 may be a baseband processor or a central processor. The baseband processor may be configured to process a communication protocol and communication data, and the central processor may be configured to control a communication apparatus (e.g., a base station, a baseband chip, a terminal, a terminal chip, a DU or CU, etc.), to execute a computer program, and process data of the computer program.

Alternately, the apparatus 800 may further include one or more memories 802 with a computer program 803 stored thereon. The memory 802 executes the computer program 803 so that the apparatus 800 performs the method as described in the above method embodiments. The computer program 803 may be solidified in the processor 801, in which case the processor 801 may be implemented by a hardware.

Alternately, the memory 802 may further store data. The apparatus 800 and the memory 802 may be independently configured or integrated together.

Alternately, the apparatus 800 may further include a transceiver 805 and an antenna 806. The transceiver 805 may be referred to as a transceiving unit, a transceiver or a transceiving circuit, which may be configured to achieve a transceving function. The transceiver 805 may include a receiver and a transmitter. The receiver may be referred to as a receiver or a receiving circuit, etc., for implementing a receiving function; the transmitter may be referred to as a transmitter or a transmission circuit, etc. for implementing a transmission function.

Alternately, the apparatus 800 may further include one or more interface circuits 807. The interface circuit 807 is configured to receive code instructions and transmit the code instructions to the processor 801. The processor 801 runs the code instructions so that the apparatus 800 performs the method according to the above method embodiment.

In the case that the apparatus 800 is a terminal, the transceiver 805 is configured to execute step 101 to step 102 in FIG. 1; step 201 to step 202 in FIG. 2; step 301 to step 302 in FIG. 3; and the processor 801 is configured to execute step 103 in FIG. 1; step 203 in FIG. 2; and step 303 in FIG. 3.

In the case that the apparatus 800 is a network device, the transceiver 805 is configured to execute step 401 to step 402 in FIG. 4; and step 501 to step 503 in FIG. 5.

In an implementation, the processor 801 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the apparatus 800 may include a circuit that may implement a transmitting or receiving or communication function in the above method embodiments. The processor and the transceiver described in the present disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor(BJT), bipolar CMOS(BiCMOS), silicon germanium(SiGe) and gallium arsenide(GaAs).

The apparatus for PDSCH transmission described in the above embodiments may be a network device or a terminal, but the scope of the apparatus for PDSCH transmission described in the present disclosure is not limited thereto, and a structure of the apparatus for PDSCH transmission may not be subject to FIG. 8. The apparatus for PDSCH transmission may be a stand-alone device or may be a part of a larger device. For example, the apparatus for PDSCH transmission may be:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal, a smart terminal, a cellular phone, a wireless device, a handset, a mobile unit, a vehicle device, a network device, a cloud device, an artificial intelligence device, etc.; and
(6) others, and so forth.

In the case that the apparatus for PDSCH transmission may be a chip or a system on chip, please refer to a diagram of a structure of a chip as illustrated in FIG. 9. The chip illustrated in FIG. 9 includes a processor 901 and an interface 902, in which the number of processors 901 may be one or more and the number of interfaces 902 may be more than one.

In the case where the chip is used to implement the functionality of a network device in an embodiment of the present disclosure:
interface 902 for receiving code instructions and sending them to said processor.
processor 901 for running code instructions to perform a method as described in FIG. 1 to FIG. 3.

In the case where the chip is used to implement the functionality of a terminal in an embodiment of the present disclosure:
the interface 902 for receiving code instructions and sending code instructions to the processor.
the processor 901 for running code instructions to perform a method for PDSCH transmission as described in FIG. 4 to FIG. 5.

Alternately, the chip further includes a memory 903, configured to save a necessary computer program and data.

Those skilled in the related art may understand that, various illustrative logical blocks and steps listed in embodiments of the present disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the present disclosure.

A communication system is further provided in embodiments of the disclosure. The system includes an apparatus for PDSCH transmission as a terminal and an apparatus for PDSCH transmission as a network device in the preceding embodiments of FIG. 6 to FIG. 7, or, alternatively, the system includes an apparatus for PDSCH transmission as a terminal and an apparatus for PDSCH transmission as a network device in the preceding embodiment of FIG. 8.

A readable storage medium with instructions stored thereon is further provided in the disclosure. When the instructions are executed by a computer, steps in the any one method embodiment are implemented.

A computer program product is further provided in the disclosure. The computer program product implements functions of the above any one method embodiment when executed by a processor.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in present disclosure are distinguished merely for convenience of description, and are not intended to limit the scope of embodiments of the disclosure, but also to indicate an order of precedence.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first" , "second" , "third" , "A" , "B" , "C" and "D" , and there is no order of precedence or magnitude between technical features described in "first" , "second" , "third" , "A" , "B" , "C" and "D" .

Corresponding relationships indicated by tables in the present disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the present disclosure, corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solution. Those skilled in the art may adopt different methods for each specific application to implement the described functions, but such implementation should not be considered beyond the scope of the present disclosure.

Those skilled in the art may clearly understand that, a specific working process of a system, an apparatus and a unit described above may refer to a corresponding process in the above method embodiments, which will not be repeated here.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of the disclosure shall be included in the protection scope of the disclosure.

## Claims

1. A method for physical downlink shared channel (PDSCH) transmission, performed by a terminal, comprising:
receiving first indication information from a network device, wherein the first indication information indicates at least one first transmission configuration indication (TCI) state;
receiving second indication information from the network device, wherein the second indication information is configured for the terminal to determine that the PDSCH uses a target transmission manner; and
determining a second TCI state corresponding to the PDSCH delivered by using the target transmission manner from the at least one first TCI state, wherein the second TCI state is configured for the terminal to receive the PDSCH.

2. The method of claim 1, wherein the first indication information is a first medium access control control element (MAC CE); and
the first MAC CE indicates the at least one first TCI state, and the at least one first TCI state corresponds to one codepoint in downlink control information (DCI).

3. The method of claim 1, wherein the first indication information is joint indication information of a first MAC CE and first DCI;
the first MAC CE indicates a TCI state corresponding to each codepoint of a plurality of codepoints, and the plurality of codepoints comprise a first codepoint corresponding to the at least one first TCI state; and
the first DCI indicates the first codepoint.

4. The method of claim 2 or 3, wherein the target transmission manner comprises at least one of following features:
one channel measurement resource (CMR) comprising at least two non-zero power channel state information reference signal (NZP CSI-RS) resources;
sending, by the terminal, space domain (SD) basis vector information corresponding to each NZP CSI-RS to the network device;
sending, by the terminal, frequency domain (FD) basis vector information corresponding to each NZP CSI-RS to the network device;
sending, by the terminal, FD basis vector information corresponding to each CMR to the network device;
each NZP CSI-RS resource corresponding to one transmission and reception point (TRP); or
receiving, by the terminal, the PDSCH delivered by using the target transmission manner based on the at least one first TCI state.

5. The method of claim 4, wherein the second indication information is first radio resource control (RRC) signaling and/or a second MAC CE.

6. The method of any one of claims 1-5, wherein determining the second TCI state from the at least one first TCI state comprises:
determining the second TCI state from the at least one first TCI state based on a first rule.

7. The method of claim 6, wherein determining the second TCI state from the at least one first TCI state based on the first rule comprises at least one of:
determining a TCI state located first in the at least one first TCI state as the second TCI state;
determining all TCI states in the at least one first TCI state as the second TCI state; or
determining TCI states corresponding to N target NZP CSI-RS resources in the at least one first TCI state as the second TCI state, where N is a positive integer.

8. The method of claim 7, wherein the N target NZP CSI-RS resources are NZP CSI-RS resources selected by the terminal for the target transmission manner.

9. The method of claim 8, further comprising:
sending a channel state information (CSI) report to the network device, wherein the CSI report comprises at least one of:
indication information of the target NZP CSI-RS resource;
SD basis vector information corresponding to the target NZP CSI-RS resource;
FD basis vector information corresponding to the target NZP CSI-RS resource;
phase coefficient information corresponding to the target NZP CSI-RS resource; or
amplitude coefficient information corresponding to the target NZP CSI-RS resource.

10. The method of any one of claims 1-5, wherein determining the second TCI state from the at least one first TCI state comprises:
receiving third indication information from the network device, wherein the third indication information indicates the second TCI state, and the second TCI state comprises one or more TCI states.

11. The method of claim 10, wherein the third indication information is at least one of:
second RRC signaling;
a third MAC CE; or
second DCI.

12. The method of claim 10, wherein the first indication information and the third indication information are the same or different MAC CEs.

13. The method of claim 12, wherein the first indication information and the third indication information are both unified TCI state activation/deactivation MAC CEs.

14. The method of claim 10, wherein the first indication information and the third indication information are the same or different DCIs.

15. The method of claim 14, wherein
the first indication information and the third indication information are both DCI excluding downlink scheduling information;
the first indication information and the third indication information are both DCI including the downlink scheduling information;
the first indication information is the DCI including the downlink scheduling information, and the third indication information is the DCI excluding the downlink scheduling information; or
the first indication information is the DCI excluding the downlink scheduling information, and the third indication information is the DCI including the downlink scheduling information.

16. The method of claim 10, further comprising:
determining an identifier of at least one bandwidth part (BWP) and/or an identifier of at least one component carrier (CC) for which the second TCI state applies.

17. The method of claim 16, wherein the third indication information further indicates at least one BWP and/or at least one CC;
the at least one BWP and/or the at least one CC for which the second TCI state applies comprises the at least one BWP and/or the at least one CC indicated by the third indication information.

18. The method of claim 17, wherein the second TCI state applies for each CC in a first CC list and each BWP on a respective CC in response to the third indication information indicating one CC in the first CC list.

19. The method of claim 17, wherein the first indication information further indicates at least one BWP and/or at least one CC, and the second TCI state applies for the at least one BWP and/or the at least one CC indicated by the first indication information.

20. The method of claim 19, wherein the second TCI state applies for each CC in a first CC list and each BWP on a respective CC in response to the first indication information indicating one CC in the first CC list.

21. A method for physical downlink shared channel (PDSCH) transmission, performed by a network device, comprising:
sending first indication information to a terminal, wherein the first indication information indicates at least one first transmission configuration indication (TCI) state; and
sending second indication information to the terminal, wherein the second indication information is configured for the terminal to determine that the PDSCH uses a target transmission manner;
the at least one first TCI state comprises a second TCI state corresponding to the PDSCH delivered by using the target transmission manner, and the second TCI state is configured for the terminal to receive the PDSCH.

22. The method of claim 21, wherein the first indication information is a first medium access control control element (MAC CE);
wherein the first MAC CE indicates the at least one first TCI state, and the at least one first TCI state corresponds to one codepoint in downlink control information (DCI).

23. The method of claim 21, wherein the first indication information is joint indication information of a first MAC CE and first DCI;
the first MAC CE indicates a TCI state corresponding to each codepoint of a plurality of codepoints, and the plurality of codepoints comprise a first codepoint corresponding to the at least one first TCI state; and
the first DCI indicates the first codepoint.

24. The method of claim 22 or 23, wherein the target transmission manner comprises at least one of following features:
one channel measurement resource (CMR) comprising at least two non-zero power channel state information reference signal (NZP CSI-RS) resources;
sending, by the terminal, space domain (SD) basis vector information corresponding to each NZP CSI-RS to the network device;
sending, by the terminal, frequency domain (FD) basis vector information corresponding to each NZP CSI-RS to the network device;
sending, by the terminal, FD basis vector information corresponding to each CMR to the network device;
each NZP CSI-RS resource corresponding to one transmission and reception point (TRP); or
receiving, by the terminal, the PDSCH delivered by using the target transmission manner based on the at least one first TCI state.

25. The method of claim 24, wherein the second indication information is first radio resource control (RRC) signaling and/or a second MAC CE.

26. The method of any one of claims 21-25, wherein the second TCI state is determined by the terminal based on a first rule and the at least one first TCI state.

27. The method of claim 26, wherein the second TCI state comprises at least one of:
a TCI state located first in the at least one first TCI state;
each TCI state in the at least one first TCI state; or
TCI states corresponding to N target NZP CSI-RS resources in the at least one first TCI state, where N is a positive integer.

28. The method of claim 27, wherein the N target NZP CSI-RS resources are NZP CSI-RS resources selected by the terminal for the target transmission manner.

29. The method of claim 28, further comprising:
receiving a channel state information (CSI) report from the terminal, wherein the CSI report comprises at least one of:
indication information of the target NZP CSI-RS resource;
SD basis vector information corresponding to the target NZP CSI-RS resource;
FD basis vector information corresponding to the target NZP CSI-RS resource;
phase coefficient information corresponding to the target NZP CSI-RS resource; or
amplitude coefficient information corresponding to the target NZP CSI-RS resource.

30. The method of any one of claims 21-25, further comprising:
sending third indication information to the terminal, wherein the third indication information indicates the second TCI state, and the second TCI state comprises one or more TCI states.

31. The method of claim 30, wherein the third indication information is at least one of:
second RRC signaling;
a third MAC CE; or
second DCI.

32. The method of claim 30, wherein the first indication information and the third indication information are the same or different MAC CEs.

33. The method of claim 32, wherein the first indication information and the third indication information are both unified TCI state activation/deactivation MAC CEs.

34. The method of claim 30, wherein the first indication information and the third indication information are the same or different DCIs.

35. The method of claim 34, wherein
both the first indication information and the third indication information are DCI excluding downlink scheduling information;
both the first indication information and the third indication information are DCI including the downlink scheduling information;
the first indication information is the DCI including the downlink scheduling information, and the third indication information is the DCI excluding the downlink scheduling information; or
the first indication information is the DCI excluding the downlink scheduling information, and the third indication information is the DCI including the downlink scheduling information.

36. The method of claim 30, further comprising:
determining an identifier of at least one bandwidth part (BWP) and/or an identifier of at least one component carrier (CC) for which the second TCI state applies.

37. The method of claim 36, wherein the third indication information further indicates at least one BWP and/or at least one CC;
the at least one BWP and/or the at least one CC for which the second TCI state applies comprises the at least one BWP and/or the at least one CC indicated by the third indication information.

38. The method of claim 37, wherein the second TCI state applies for each CC in a first CC list and each BWP on a respective CC in response to the third indication information indicating one CC in the first CC list.

39. The method of claim 37, wherein the first indication information indicates at least one BWP and/or at least one CC, and the second TCI state applies for the at least one BWP and/or the at least one CC indicated by the first indication information.

40. The method of claim 39, wherein the second TCI state applies for each CC in a first CC list and each BWP on a respective CC in response to the first indication information indicating one CC in the first CC list.

41. An apparatus for physical downlink shared channel (PDSCH) transmission, configured in a terminal, comprising:
a transceiver unit, configured to receive first indication information from a network device, wherein the first indication information indicates at least one first transmission configuration indication (TCI) state;
the transceiver unit is further configured to receive second indication information from the network device, wherein the second indication information is configured for the terminal to determine that the PDSCH uses a target transmission manner; and
a processing unit, configured to determine a second TCI state corresponding to the PDSCH delivered by using the target transmission manner from the at least one first TCI state, wherein the second TCI state is configured for the terminal to receive the PDSCH.

42. An apparatus for physical downlink shared channel (PDSCH) transmission, configured in a network device, comprising:
a transceiver unit, configured to send first indication information to a terminal, wherein the first indication information indicates at least one first transmission configuration indication (TCI) state;
the transceiver unit is further configured to send second indication information to the terminal, wherein the second indication information is configured for the terminal to determine that the PDSCH uses a target transmission manner; and
the at least one first TCI state comprises a second TCI state corresponding to the PDSCH delivered by using the target transmission manner, and the second TCI state is configured for the terminal to receive the PDSCH.

43. A communication device, comprising a processor and a memory, wherein the memory stores a computer program, which, when executed by the processor, cause the device to implement the method of any one of claims 1-20, or implement the method of any one of claims 21-40.

44. A communication device comprises: a processor and an interface circuit; wherein
the interface circuit is configured to receive code instructions and transmit the code instructions to the processor; and
the processor is configured to execute the code instructions to implement the method of any one of claims 1-20, or implement the method of any one of claims 21-40.

45. A computer-readable storage medium, configured to store instructions, wherein when the instructions are executed, the method of any one of claims 1-20 or the method of any one of claims 21-40 is implemented.
